(19) Europäisches Patentamt
European Patent Office
Office européen des brevets

(11) Veröffentlichungsnummer: **0 057 874**
**B1**

# (12) EUROPÄISCHE PATENTSCHRIFT

(45) Veröffentlichungstag der Patentschrift: **17.04.85**

(51) Int. Cl.⁴: **C 08 L 83/06**, C 08 K 5/54

(21) Anmeldenummer: **82100612.9**

(22) Anmeldetag: **29.01.82**

## (54) Organopolysiloxanformmassen.

(30) Priorität. **10.02.81 DE 3104645**

(43) Veröffentlichungstag der Anmeldung:
**18.08.82 Patentblatt 82/33**

(45) Bekanntmachung des Hinweises auf die Patenterteilung:
**17.04.85 Patentblatt 85/16**

(84) Benannte Vertragsstaaten:
**BE DE FR GB IT NL**

(56) Entgegenhaltungen:
**AT - B - 340 684**
**DE - A - 2 117 026**
**DE - A - 2 237 551**
**US - A - 3 004 859**
**US - A - 3 628 996**

(73) Patentinhaber: **BAYER AG, Konzernverwaltung RP Patentabteilung, D-5090 Leverkusen 1 Bayerwerk (DE)**

(72) Erfinder: **Sattlegger, Hans, Dr., Auf dem Heidchen 9, D-5068 Odenthal (DE)**
Erfinder: **Schnurrbusch, Karl, Dr., Kurt-Schumacher-Ring 154, D-5090 Leverkusen 1 (DE)**
Erfinder: **Achtenberg, Theo, Ing.grad., Am Heidkamp 2, D-5090 Leverkusen 3 (DE)**

EP 0 057 874 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft verbesserte Organopolysiloxan-Formmassen, die insbesondere bezüglich ihrer Haftung auf den verschiedensten Untergründen verbessert sind.

Anwendungsfertige Pasten auf der Basis von Organopolysiloxan haben ein umfangreiches Einsatzgebiet als Fugendichtstoffe gefunden. Derartige Pasten und die daraus durch Vernetzung unter Aufnahme von Luftfeuchtigkeit erhaltenen Elastomer-Formkörper stellen eine ideale Dichtungssubstanz für die vielfältigsten Zwecke dar. Beschrieben werden klassische Vertreter derartiger sogenannter Einkomponentensysteme, z. B. in FR-PS 1 188 495, DE-PS 1 247 646 oder W. Noll, Chemie und Technologie der Silicone, 1968, Verlag Chemie, Weinheim Kap. 8.1, insbesondere S. 341 und 342.

Ein noch nicht vollständig gelöstes Problem stellt bei den bekannten Einkomponenten-Systemen die Haftung auf den verschiedensten Untergründen dar. Vielfach läßt diese bei einzelnen Systemen zu wünschen übrig bzw. es müssen Substanzen zugesetzt werden, die das System anderweitig wieder negativ beeinflussen, sei es, daß sie die Massen verfärben, daß sie physiologisch bedenklich sind oder daß sich das Vernetzungsverhalten oder die Lagerstabilität nachteilig verändern.

Überraschenderweise wurde nun gefunden, daß durch Zugabe äußerst wirksamer Substanzen in kleinen Mengen eine sehr gute Haftung erreicht wird, ohne daß sie Lagerstabilität, Vernetz- und Verarbeitbarkeit beeinträchtigen.

Gegenstand der vorliegenden Erfindung sind unter Ausschluß von Feuchtigkeit lagerfähige Organopolysiloxanformmassen, die nach Zutritt von Wasser oder Wasserdampf zu Elastomeren vernetzen, bestehend im wesentlichen aus

A) $\alpha,\omega$-Dihydroxyorganopolysiloxan einer Viskosität von etwa 500 bis 2 000 000 cP (20° C)
B) einer vernetzend wirkenden Substanz
C) verstärkend oder nicht verstärkend wirkenden Füllstoffen, und/oder Pigmenten sowie weiteren Hilfsstoffen und
D) gegebenenfalls einem Härtungskatalysator, die dadurch gekennzeichnet, daß sie noch zusätzlich
E) 0,1 bis 15 Gew.-% — bezogen auf die Gesamtmasse — einer Siliciumverbindung der folgenden allgemeinen Formel

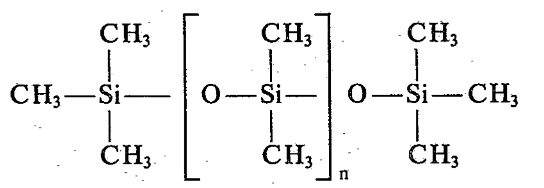

mit einer Viskosität von 0,65 bis 4,5 mPas (cP), und wobei n für eine Zahl von 0 bis 9 steht, enthalten.

Diese Siloxane haben neben den genannten positiven Eigenschaften überraschenderweise keine unangenehme Begleiterscheinungen, wie sie vielfach bei anderen haftungsvermittelnden Substanzen bekannt sind, z. B. der Abspaltung von hydrolyseempfindlichen Substituenten, die zu einer Geruchsbelästigung (bei Aminen) oder zu einer Korrosion (bei Essigsäure) führen können oder Zusätze, wie z. B. Titanester, die eine transparente Masse trüben.

Diese Zusätze zeichnen sich ferner dadurch aus, daß sie — z. B. im Vergleich zu polymeren, harzartigen Zusätzen — destillierbar sind und deshalb streng definierte Verbindungen mit reproduzierbarem Eigenschaftsbild sind.

Im allgemeinen eignen sich vor allem die Siloxane besonders gut bei denen n Werte von 0 bis 5 annimmt, besonders bevorzugt wird Hexamethyldisiloxan eingesetzt.

Die erfindungsgemäßen Zusätze verbessern nicht nur die Haftung der Systeme sondern bewirken im allgemeinen auch eine etwas längere Hautbildungszeit. Dies ist in den meisten Verarbeitungsgebieten sehr erwünscht.

Die Zusatzsubstanz wird in Mengen von 0,1—15 Gew.-%, vorzugsweise 1—4 Gew.-% bezogen auf die Gesamtmenge eingesetzt.

Die erfindungsgemäßen, kalthärtenden Einkomponentensysteme enthalten üblicherweise folgende Bestandteile:

1. Ein $\alpha,\omega$-Dihydroxypolydiorganosiloxan; dabei wird die Organogruppe normalerweise eine Methyl- oder Phenylgruppe sein. In kleineren Anteilen kann auch eine Halogenalkyl-, wie z. B. Chlormethyl-, eine Alkenyl-, wie z. B. Vinyl- oder eine Cycloalkyl-, wie z. B. eine Cyclohexylgruppe vorliegen. Die Viskosität dieser Dihydroxypolydiorganosiloxan liegt — je nach den Anforderungen der Endprodukte — zwischen etwa 500 und 2 000 000 mPas (cP) (20° C). Derartige Homo-, Hetero- oder auch Copolymerisate machen im allgemeinen etwa 10 Gew.-% bis 90 Gew.-% der gesamten Pastenmenge aus.

2. Bei der Vernetzersubstanz handelt es sich um polyfunktionelle Organosiliciumverbindungen mit mehr als zwei funktionellen Gruppen. Diese Substanz muß in der Lage sein, die unter 1. genannten Substanzen zu »vernetzen«.
   Bei Herstellung der erfindungsgemäßen Einkomponenten Kautschukmassen durch Abmischen der verschiedenen unter A bis E aufgeführten Substanzen können die als Vernetzer dienenden Substanzen entweder während des Mischprozesses oder während des Lagerprozesses oder auch schon in einer Art Vormischung durch Abspaltung einer der reaktiven Gruppen an die Polymerenenden gebunden sein.
   Solche Organosiliciumverbindungen können sein:

   a) nach der Formel

      $R_aSiX_{4-a}$

      a = 0 bis 2,
      Hierbei kann R ein Alkyl, Alkenyl, Aryl oder entsprechend halogenierter Rest sein.
      X ist eine reaktive Gruppe, die mit einer Silanolgruppe des Bestandteils 1) reagieren kann. Die reaktive Gruppe kann z. B. eine Alkoxy-, Acyloxy-, Amino-, Cycloalkylamino-, Säureamid- oder Oximgruppe sein.
   b) durch teilweise Hydrolyse entstandene Di-, Tri- und Polysiloxane der unter a) aufgeführten Silane wie das Formelbild für das Disiloxan zeigt

      $R_aX_{3-a}Si\text{-}O\text{-}SiX_{3-a}R_a$

      wie c) in DE-OS 1 794 197 dargestellt.
3. Füllstoffe (beladen oder unbeladen) allgemeiner Art einzeln oder wie meistens im Gemisch verwendet, z. B. verstärkende Füllstoffe (hochdisperse, durch Flammhydrolyse hergestellte Kieselsäure, Titandioxyd, Ruß usw.) oder Füllstoffe wie Quarzmehl, Kreide (natürliche und gefällte), Kunststoffpulver und Pigmente aller Art.
4. Hilfsstoffe verschiedenster Art, wie z. B. die unter 2. beschriebenen mit Aminoalkyl, Epoxyalkyl oder anderen reaktiven Alkylgruppen oder auch Verbindungen wie unter 2. beschrieben, bei denen a = 0 ist und verschiedene C sich an einem Siliciumatom befinden.

   a) Zusatzstoffe, die z. B. wirksam sind als Trockner, wie z. B. komplexe Titansäureester (vgl. z. B. DE-PS 1 258 087).
   b) Katalysatoren zur Beschleunigung der Reaktion Silanol/Vernetzer oder Vernetzer-Wasser wie Metallseifen der Metalle von Blei bis Mangan in der Spannungsreihe der Metalle oder Aminoverbindungen.
   c) Lösungsmittelzusätze, wie z. B. Toluol, Petrolether.
   d) als Weichmacher bezeichnete Zusätze, wie z. B. $\alpha,\omega$-Trialkylsiloxypolydiorganosiloxan von 10 bis 1 000 000 mPas (cP) Viskosität, Polybutene, Benzinkohlenwasserstoffe oder Phosphorsäureester.
   e) Zusatzstoffe, die die fungistatische Wirksamkeit der Dichtstoffe verbessern.
   f) Zusätze, die die physikalischen Eigenschaften der Dichtstoffe erhöhen, wie z. B. die Heißluftbeständigkeit, Wärmeleitfähigkeit, elektrische Leitfähigkeit oder Chemikalienbeständigkeit.

Die Herstellung der Organopolysiloxanformmassen wird in an sich bekannter Weise — z. B. wie in den eingangs erwähnten Veröffentlichungen — durchgeführt.

Die vorliegende Erfindung soll anhand der folgenden Beispiele noch näher erläutert werden.

Beispiel 1

Es wird eine Mischung aus 60 Gew.-Tle. $\alpha,\omega$-Dihydroxypolydimethylsiloxan, Viskosität bei 20°C 50 000 cSt ($1 cSt = 10^{-6}\ m^2/s$) und 20 Gew.-Tle. $\alpha,\omega$-Bis-(trimethylsiloxy)-polydimethylsiloxan, Viskosität bei 20°C 1400 cSt ($1 cSt = 10^{-6}\ m^2/s$) vorgelegt. Dazu werden bei Raumtemperatur 4 Gew.-Tle. Ethyltriacetoxysilan und 2 Gew.-Tle. Hexamethyldisiloxan gegeben und kurz gerührt. Nun werden 9 Gew.-Tle. feindisperse Kieselsäure zugegeben und bis zur Homogenität unter Vakuum gerührt. Zum Schluß werden 0,01 Gew.-Tle. eines Katalysators (Dibutylzinndiacetat) direkt oder in einem Lösungsmittel gelöst (z. B. Toluol oder Dioxan) zugegeben und unter Vakuum homogen eingerührt. Nun wird die Masse in Kartuschen oder Tuben abgefüllt und kann ohne Feuchtigkeitszutritt mindestens $^1/_2$ Jahr gelagert werden, ohne daß die Vulkanisationsfähigkeit oder die Haftung bei einer späteren Anwendung beeinträchtigt wird.

Die erfindungsgemäße Maßnahme führt dazu, daß das Produkt ohne Voranstrich auf Aluminium, Eisen, eloxiertem Aluminium sowie auf Kunststoffen wie z. B. auf Plexiglas gut haftet. Ein Dichtstoff,

der ohne den Zusatz von Hexamethyldisiloxan hergestellt wurde, haftet auf diesen Untergründen wesentlich schlechter. Die Haftungsvorteile haben besonders im Bausektor, und zwar im Fensterbau entscheidende Bedeutung.

### Beispiel 2

Es wird eine Mischung aus 60 Gew.-Tle. $\alpha,\omega$-Dihydroxypolydimethylsiloxan und 20 Gew.-Tle. $\alpha,\omega$-Bis-trimethyl-siloxy-polydimethylsiloxan gemäß Beispiel 1 vorgelegt. Dazu werden bei Raumtemperatur 4 Gew.-Tle. Methyltriacetoxysilan und 2 Gew.-Tle. Hexamethyldisiloxan gegeben und kurz gerührt, 9 Gew.-Tle. feindisperse Kieselsäure zugegeben und bis zur Homogenität unter Vakuum gerührt. Zum Schluß werden 0,05 Gew.-Tle. eines Katalysators (Dibutylzinndiacetat) direkt oder in einem Lösungsmittel gelöst (z. B. Toluol oder Dioxan) zugegeben und unter Vakuum homogen eingerührt. Nun wird die Masse in Kartuschen oder Tuben abgefüllt und kann ohne Feuchtigkeitszutritt mindestens $^1/_2$ Jahr gelagert werden, ohne daß die Vulkanisationsfähigkeit oder die Haftung bei einer späteren Anwendung beeinträchtigt wird.

Die erfindungsgemäße Maßnahme führt dazu, daß dieses Produkt ohne Voranstrich eine wesentlich bessere Haftung auf Metallen wie Al, Fe, Eloxal und Kunststoffen zeigte.

### Beispiel 3

Es wird eine Mischung aus 60 Gew.-Tle. $\alpha,\omega$-Dihydroxypolydimethylsiloxan und 20 Gew.-Tle. $\alpha,\omega$-Bis-trimethylsiloxy-polydimethylsiloxan gemäß Beispiel 1 vorgelegt. Dazu werden bei Raumtemperatur 3,5 Gew.-Tle. Vinyltriacetoxysilan und 2 Gew.-Tle. Hexamethyldisiloxan gegeben und kurz gerührt. Nun werden 9 Gew.-Tle. feindisperse Kieselsäure zugegeben und bis zur Homogenität unter Vakuum gerührt. Zum Schluß werden 0,05 Gew.-Tle. eines Katalysators (Dibutylzinndiacetat) direkt oder in einem Lösungsmittel gelöst (z. B. Toluol oder Dioxan) zugegeben und unter Vakuum homogen eingerührt. Nun wird die Masse in Kartuschen oder Tuben abgefüllt und kann ohne Feuchtigkeitszutritt mindestens $^1/_2$ Jahr gelagert werden, ohne daß die Vulkanisationsfähigkeit oder die Haftung bei einer späteren Anwendung beeinträchtigt wird.

Mit diesem Zusatz wurde erfindungsgemäß ebenfalls ohne Voranstrich eine gute Haftung auf den verschiedensten Metallen wie Eisen, Aluminium und Eloxal erzielt. Auch hier trat der Vorteil der längeren offenen Zeit auf.

### Beispiel 4

Es wird eine Mischung aus 45 Gew.-Tle. $\alpha,\omega$-Dihydroxypolydimethylsiloxan und 22,5 Gew.-Tle. $\alpha,\omega$-Bis-trimethylsiloxy-polydimethylsiloxan gemäß Beispiel 1 vorgelegt. Dazu werden bei Raumtemperatur 4 Gew.-Tle. Di-N-methylbenzamidethoxysilan und 0,5 Gew.-Tle. Hexamethyldisiloxan gegeben und kurz gerührt. Nun werden 20 Gew.-Tle. Kreide, 5 Gew.-Tle. feindisperse Kieselsäure und 3 Gew.-Tle. einer Farbpaste zugegeben und bis zur Homogenität unter Vakuum gerührt. Zum Schluß werden 0,03 Gew.-Tle. eines Katalysators (Dibutylzinndiacetat) direkt oder in einem Lösungsmittel gelöst (z. B. Toluol oder Dioxan) zugegeben und unter Vakuum homogen eingerührt. Nun wird die Masse in Kartuschen oder Tuben abgefüllt und kann ohne Feuchtigkeitszutritt mindestens $^1/_2$ Jahr gelagert werden, ohne daß die Vulkanisationsfähigkeit oder die Haftung bei einer späteren Anwendung beeinträchtigt wird.

Bei diesem Beispiel zeigte sich ebenfalls die große Bedeutung des Zusatzes in bezug auf die Haftung. Bei Aluminium, Eloxal, Stahl, Eisen, Zink, Kupfer, Beton, PVC und Polycarbonat wurde auch hier ohne Voranstrich und unter Belastung durch Wasser ein gutes Haftungsergebnis erreicht.

### Beispiel 5

Es wird eine Mischung aus 58 Gew.-Tle. $\alpha,\omega$-Dihydroxypolydimethylsiloxan und 20 Gew.-Tle. $\alpha,\omega$-Bis-trimethylsiloxy-polydimethylsiloxan gemäß Beispiel 1 vorgelegt. Dazu werden bei Raumtemperatur 6 Gew.-Tle. N,N-Bis-Triethoxysilyl-methyl-allylamin und 1 Gew.-Tl. Hexamethyldisiloxan gegeben und kurz gerührt. Nun werden 13 Gew.-Tle. feindisperse Kieselsäure zugegeben und bis zur Homogenität unter Vakuum gerührt. Zum Schluß wird die Masse in Kartuschen oder Tuben abgefüllt und kann ohne Feuchtigkeitszutritt mindestens $^1/_2$ Jahr gelagert werden, ohne daß die Vulkanisationsfähigkeit oder die Haftung bei einer späteren Anwendung beeinträchtigt wird.

Eine so ausgerüstete Masse haftet ohne Voranstrich auch noch nach einer Wasserlagerung auf folgenden Untergründen: Eloxal, Aluminium, Eisen und Polycarbonat. Ebenfalls auf Stahl und Zink wurde eine wesentliche Verbesserung der Haftung erreicht. Es wurde auch bei diesem Beispiel eine

Erniedrigung der mechanischen Eigenschaften erreicht, was sich positiv auf die Haftung auswirkt (Flankenbelastung).

## Beispiel 6

Es wird eine Mischung aus 60 Gew.-Tle. $\alpha,\omega$-Dihydroxypolydimethylsiloxan und 20 Gew.-Tle. $\alpha,\omega$-Bis-trimethylsiloxy-polydimethylsiloxan gemäß Beispiel 1 vorgelegt. Dazu werden bei Raumtemperatur 6 Gew.-Tle. Methyltri-butanonoximsilan und 1 Gew.-Tl. Hexamethyldisiloxan gegeben und kurz gerührt. Nun werden 9 Gew.-Tle. feindisperse Kieselsäure zugegeben und bis zur Homogenität unter Vakuum gerührt. Zum Schluß werden 0,1 Gew.-Tle. Katalysator (Dibutylzinndilaurat) direkt oder in einem Lösungsmittel gelöst (z. B. Toluol oder Dioxan) zugegeben und unter Vakuum homogen eingerührt. Nun wird die Masse in Kartuschen oder Tuben abgefüllt und kann ohne Feuchtigkeitszutritt mindestens $^1/_2$ Jahr gelagert werden, ohne daß die Vulkanisationsfähigkeit oder die Haftung bei einer späteren Anwendung beeinträchtigt wird.

Die erfindungsgemäße Maßnahme führte dazu, daß dieser Dichtstoff ohne Voranstrich auf Aluminium, Zink, PVC und Beton, sogar auch nach einer Wasserbelastung eine gute Haftung zeigte.

## Beispiel 7

Es wird eine Mischung aus 60 Gew.-Tle. $\alpha,\omega$-Dihydroxypolydimethylsiloxan und 25 Gew.-Tle. $\alpha,\omega$-Bis-trimethylsiloxy-polydimethylsiloxan gemäß Beispiel 1 vorgelegt. Dazu werden bei Raumtemperatur 4 Gew.-Tle. Methylethoxydipropionamidosilan, 1 Gew.-Tl. Hexamethyldisiloxan gegeben und kurz gerührt. Nun werden 8 Gew.-Tle. feindisperse Kieselsäure zugegeben und bis zur Homogenität unter Vakuum eingerührt. Zum Schluß werden 0,4 Gew.-Tle. Katalysator (DBTA) direkt oder in einem Lösungsmittel gelöst (z. B. Toluol oder Dioxan) zugegeben und unter Vakuum eingerührt. Nun wird die Masse in Kartuschen oder Tuben abgefüllt und kann ohne Feuchtigkeitszutritt mindestens $^1/_2$ Jahr gelagert werden, ohne daß die Vulkanisationsfähigkeit oder die Haftung bei einer späteren Anwendung beeinträchtigt wird.

Auch bei diesem Beispiel konnte eine gute Haftung ohne Voranstrich auf Eloxal, Aluminium, Eisen und PVC auch nach Wasserlagerung erreicht werden. Eine weitere Haftverbesserung wurde bei Beton und Holz erreicht. Ein weiterer Vorteil ist die Geruchsneutralität der Paste sowie deren Weichheit, was in bezug auf die Haftung im Hochbau von großem Vorteil ist.

## Beispiel 8

Es wird eine Mischung aus 60 Gew.-Tle. $\alpha,\omega$-Dihydroxypolydimethylsiloxan und 20 Gew.-Tle. $\alpha,\omega$-Bis-trimethylsiloxy-polydimethylsiloxan gemäß Beispiel 1 vorgelegt. Dazu werden bei Raumtemperatur 5 Gew.-Tle. Methylpropoxydicaprolactamsilan und 0,25 Gew.-Tle. Hexamethyldisiloxan gegeben und kurz gerührt. Nun werden 7 Gew.-Tle. feindisperse Kieselsäure zugegeben und bis zur Homogenität unter Vakuum gerührt. Zum Schluß werden 0,1 Gew.-Tle. Katalysator (Dibutylzinndiacetat) direkt oder in einem Lösungsmittel gelöst (z. B. Toluol oder Dioxan) zugegeben und unter Vakuum eingerührt.

Schließlich wird die Masse in Kartuschen oder Tuben abgefüllt und kann ohne Feuchtigkeitszutritt mindestens $^1/_2$ Jahr gelagert werden, ohne daß die Vulkanisationsfähigkeit oder die Haftung bei einer späteren Anwendung beeinträchtigt wird.

Die erfindungsgemäße Maßnahme führt dazu, daß das Produkt ohne Voranstrich gegenüber einem Produkt ohne diesen Zusatz eine wesentliche Haftverbesserung auf einer Reihe von Metallen (Aluminium, Kupfer, Stahl), Kunststoffen (verschiedene Arten von PVC) und auf Beton auch noch nach einer Wasserlagerung von einer Woche zeigte.

## Patentansprüche

1. Unter Ausschluß von Feuchtigkeit lagerfähige Organopolysiloxanformmassen, die nach Zutritt von Wasser oder Wasserdampf zu Elastomeren vernetzen, bestehend im wesentlichen aus

A) $\alpha,\omega$-Dihydroxyorganopolysiloxan einer Viskosität von etwa 500 bis 2 000 000 mPas (cP) (20°C)
B) einer vernetzend wirkenden Substanz,
C) verstärkend oder nicht vestärkend wirkenden Füllstoffen, und/oder Pigmenten sowie weiteren Hilfsstoffen und
D) gegebenenfalls einem Härtungskatalysator,
dadurch gekennzeichnet, daß sie noch zusätzlich

E) 0,1 bis 15 Gew.-% — bezogen auf die Gesamtmenge — einer Substanz der allgemeinen Formel

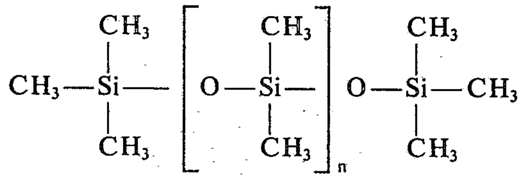

wobei n für eine Zahl von 0 bis 9 steht,
enthalten.

2. Organopolysiloxanformmassen gemäß Anspruch 1, dadurch gekennzeichnet, daß als Substanz E) Hexamethyldisiloxan eingesetzt wird.

3. Organopolysiloxanformmassen gemäß einem der Ansprüche 1 oder 2, dadurch gekennzeichnet, daß als Vernetzer Ethyltriacetoxysilan eingesetzt wird.

**Claims**

1. Organopolysiloxane moulding compositions which are capable of storage in the absence of moisture and which crosslink to give elastomers after the admission of water or steam, consisting essentially of

A) a $\alpha,\omega$-dihydroxyorganopolysiloxane of a viscosity of about 500 to 2 000 000 mPa · s (cP) (20° C)
B) a substance which produces crosslinking,
C) reinforcing or non-reinforcing fillers, and/or pigments and other auxiliaries and
D) if appropriate, a hardening catalyst,
characterised in that they additionally contain
E) 0.1 to 15% by weight — based on the total quantity — of a substance of the general formula

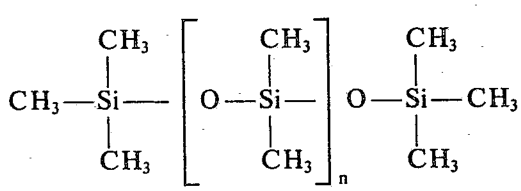

wherein n represents a number from 0 to 9.

2. Organopolysiloxane moulding compositions according to Claim 1, charcterised in that hexamethyldisiloxane is used as substance E).

3. Organopolysiloxane moulding compositions according to one of Claims 1 or 2, characterised in that ethyl triacetoxysilane is used as the crosslinking agent.

**Revendications**

1. Matières à mouler à base d'organopolysiloxannes stables à la conservation à l'abri de l'humidité et réticulant en élastomères en présence d'eau ou de vapeur d'eau, consistant essentiellement en

A) un alpha, oméga-dihydroxyorganopolysiloxanne ayant une viscosité d'environ 500 à 2 000 000 de mPas à 20° C,
B) une substance à effet réticulant,
C) des matières de charge renforçantes ou non renforçantes et/ou des pigments et d'autres produits auxiliaires, et
D) eventuellement un catalyseur de durcissement,
caractérisées en ce qu'elles contiennent en outre

E) de 0,1 à 15% en poids — par rapport à la quantité totale d'une substance de formule générale

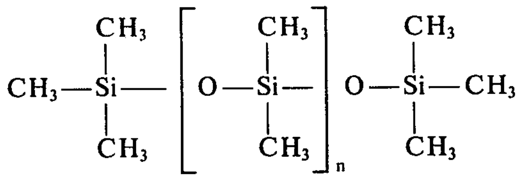

dans laquelle n est un nombre de 0 à 9.

2. Matières à mouler à base d'organopolysiloxannes selon la revendication 1, caractérisées en ce qu'elles contiennent en tant que substance E) l'hexaméthyldisiloxanne.

3. Matières à mouler à base d'organopolysiloxannes selon l'une des revendications 1 ou 2, caractérisées en ce qu'elles contiennent en tant que réticulant de l'éthyltriacétoxysilane.